# EUROPEAN PATENT APPLICATION

(11) **EP 3 206 418 A1**
(43) Date of publication of application: **16.08.2017**
(21) Application number: 15849540.8
(22) Date of filing: 08.10.2015
(51) Int. Cl.: H04W 4/26, H04L 12/28, H04M 11/00, H04W 8/20

(54) **PACKET USAGE AMOUNT CALCULATION DEVICE AND PACKET USAGE AMOUNT CALCULATION METHOD**

(30) Priority: 10.10.2014 JP 2014208830
(71) Applicant: NTT DOCOMO, INC., Chiyoda-ku Tokyo 100-6150 (JP)
(72) Inventor: HONDA, Yasuyuki, Tokyo 100-6150 (JP); ISOBE, Shin-ichi, Tokyo 100-6150 (JP); SUGIYAMA, Karin, Tokyo 100-6150 (JP); TSURUSAKI, Aya, Tokyo 100-6150 (JP); UKAWA, Yuko, Tokyo 100-6150 (JP)
(74) Representative: Viering, Jentschura & Partner mbB Patent- und Rechtsanwälte
(86) International application number: PCT/JP2015/078574
(87) International publication number: WO 2016/056614

(57) **Abstract**

In an embodiment, there are provided a packet usage amount calculation device and a packet usage amount calculation method capable of calculating a usage amount of a local network from a home network side, when communication is performed using subscriber information for the local network. In a proxy device 100 according to the embodiment, a subscriber profile storage unit 101 stores token information associated with the subscriber information (a local network number) of the local network and an SMS instruction unit 103 transmits a token to a local network number destination. A connection reception unit 104 receives token information and IP address information from a terminal device 400 and a usage amount calculation unit 105 calculates a usage amount on the basis of an IP address.

## Description

### Technical Field

The present invention relates to a packet usage amount calculation device and a packet usage amount calculation method.

### Background Art

Conventionally, a method of setting a discount for each of communication carriers of a plurality of subscriber countries and executing charging processing of a charge of international roaming communication, using standard charging processing for the charge of the international roaming communication, is known as a method of calculating the charge of the international roaming communication.

For example, in Patent Literature 1, a charging information processing device of a communication network (local network) of a communication carrier of a first country calculates a charge for the international roaming communication used by the communication network of the communication carrier of the first country, on the basis of a charge calculation rate before applying a discount, and executes discount processing, when a communication carrier (communication carrier of a home network) of a second country of a use information transmission destination transmitting use information of the international roaming communication is a communication carrier of a charge discount target, on the basis of charge discount information including propriety of a discount application set to the communication carrier of the second country which a user performing the international roaming communication makes a communication service contract with.

### Citation List

### Patent Literature

Patent Literature 1 : Japanese Patent Application Laid-Open Publication No. 2009-60264

### Summary of Invention

### Technical Problem

However, when a terminal device of the user performs communication of roaming out (communication to the local network by the terminal device of the user of the home network), an international relay carrier is used. In this case, because the international relay carrier is used, the user is charged a considerable connection charge. Therefore, it is considered that communication is performed in the local network using subscriber information for the local network.

In this case, because the communication is closed in the local network, a use state of the local network cannot be grasped at the home network side. Therefore, a service according to the use state of the local network side cannot be provided at the home network side. As a result, there is a problem in that it is not possible to provide a discount application at the home network side according to the use state of the local network.

The present invention has been made in view of the above circumstances and an object thereof is to provide a packet usage amount calculation device and a packet usage amount calculation method capable of calculating a usage amount of a local network from a home network side, when communication is performed using subscriber information for the local network.

### Solution to Problem

A packet calculation device according to one embodiment of the present invention is a packet usage amount calculation device for calculating a packet usage amount of a terminal device in a local network in a plurality of networks including at least the local network and a home network, the device including: a permission information storage unit configured to store permission information associated with subscriber information of the local network; a permission information transmission unit configured to transmit the permission information to a subscriber information destination of the local network; an IP address information reception unit configured to receive the permission information transmitted by the permission information transmission unit and IP address information of the terminal device; and a calculation unit configured to calculate a packet usage amount based on an IP address received by the IP address information reception unit.

A packet usage amount calculation method according to one embodiment of the present invention is a packet usage amount calculation method that is executed by a packet usage amount calculation device for calculating a packet usage amount of a terminal device in a local network in a plurality of networks including at least the local network and a home network, the method including: a permission information storage step of storing permission information associated with subscriber information of the local network; a permission information transmission step of transmitting the permission information to a subscriber information destination of the local network; an IP address information reception step of receiving the permission information transmitted in the permission information transmission step and IP address information of the terminal device; and a calculation step of calculating a packet usage amount based on an IP address received by the IP address information reception step.

In the packet usage amount calculation device and the packet usage amount calculation method according to one embodiment of this invention, the permission information associated with the subscriber information of the local network is transmitted to the subscriber information destination and the IP address information and the permission information are received from the terminal device. Therefore, a usage amount for each IP address of the terminal device using the local network can be calculated. That is, even when the communication is performed using the subscriber information for the local network, the usage amount of the local network can be calculated from the home network side.

The packet usage amount calculation device described above further includes: a message transmission unit configured to transmit a message to the subscriber information destination of the local network, according to reception of the IP address information by the IP address information reception unit; and a used communication network specifying unit configured to specify a type of a used communication network, on the basis of a delivery situation of the message transmitted by the message transmission unit, wherein the calculation unit determines whether the packet usage amount is calculated, on the basis of the type of the used communication network specified by the used communication network specifying unit. In this case, the packet usage amount calculation device can determine whether the use is a charging target, by the delivery situation of the message.

In the packet usage amount calculation device described above, when the message transmitted by the message transmission unit is not delivered to the terminal device, the used communication network specifying unit determines that the type of the used communication network is a wireless local area network, and when it is determined by the used communication network specifying unit that the used communication network is the wireless local area network, the calculation unit may not calculate a packet usage amount of the wireless local area network. According to this invention, when the wireless local area network is used, the usage amount can be prevented from being calculated, in spite of the use of the network not to be a charging target.

The packet usage amount calculation device described above further includes: a history acquisition unit configured to acquire IP address information used recently and type information of a used communication network of an IP address, wherein, when the IP address received by the IP address information reception unit is equal to the IP address acquired by the history acquisition unit, the calculation unit may determine whether the packet usage amount is calculated, on the basis of a type of a used communication network associated with the IP address. According to this invention, the packet usage amount device can determine whether the packet usage amount is calculated, on the basis of a previous connection state (for example, a network type of a previously received IP address).

In the packet usage amount calculation device, an SMS message may be applied as the message.

### Advantageous Effects of Invention

According to one embodiment of the present invention, even when communication is performed using subscriber information for a local network, a usage amount of the local network can be calculated from a home network side.

### Brief Description of Drawings

FIG. 1 is a system configuration diagram of a communication system including a proxy device 100 according to this embodiment.
FIG. 2 is a functional block diagram of the proxy device 100, a free communication amount management device 200, and an SMS server 300.
FIG. 3 is a diagram illustrating an example of information stored by a subscriber profile storage unit 101.
FIG. 4 is a diagram illustrating an example of information stored by a free communication amount storage unit 201.
FIG. 5 is a block diagram illustrating hardware configurations of the proxy device 100, the free communication amount management device 200, and the SMS server 300.
FIG. 6 is a sequence diagram illustrating processing for registering token information in a terminal device 400.
FIG 7 is a flowchart illustrating processing for calculating a usage amount according to a use network of the terminal device 400.
FIG. 8 is a sequence diagram illustrating processing for registering token information in the terminal device 400.

### Description of Embodiments

Hereinafter, this embodiment will be described with reference to the drawings. If possible, the same portions are denoted with the same reference numerals and overlapped description is omitted.

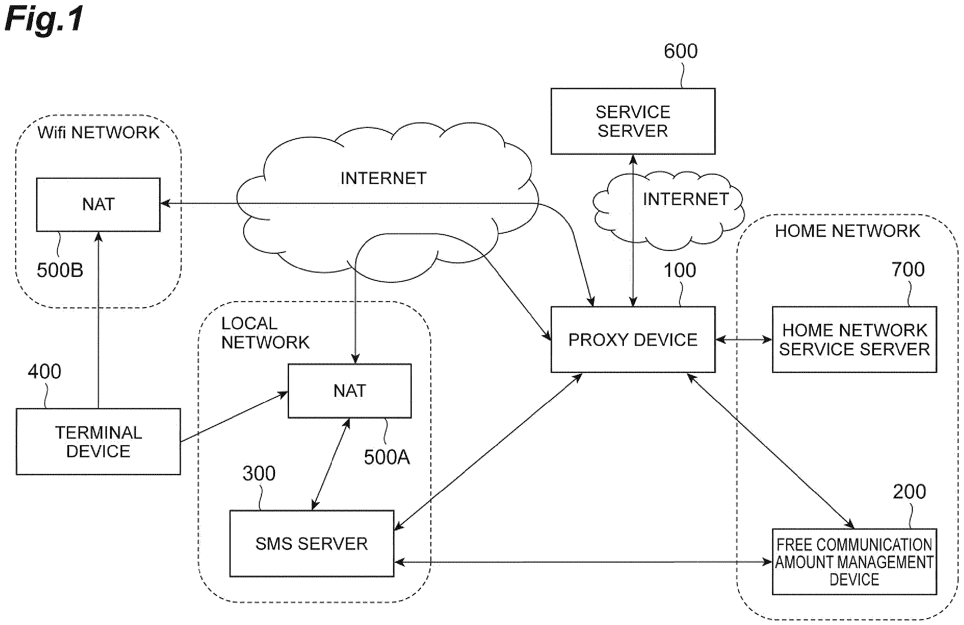

FIG. 1 is a system configuration diagram of a communication system including a proxy device 100 to be a data relay device according to this embodiment. As illustrated in FIG. 1, the communication system is configured to include the proxy device 100 (packet usage amount calculation device), a free communication amount management device 200, an SMS server 300, a terminal device 400, a network address translator (NAT) 500A of a local network, an NAT 500B of a Wifi network, a home network service server 700, and a service server 600. In addition, the communication system is constructed using a plurality of networks (the local network, a home network, and the Wifi network).

The proxy device 100 is the data relay device to connect various service servers (for example, the service server 600 and the home network service server 700) and the NAT 500 and can transmit data transmitted from the various service servers to the NAT 500 to transfer the data to the terminal device 400 via the NAT 500. In addition, the proxy device 100 can receive data transmitted from the terminal device 400 via the NAT 500 and can transmit the data to the various service servers. In addition, the proxy device 100 calculates an amount of data transmitted to and received from the terminal device 400 and notifies the free communication amount management device 200 of a calculation result.

The free communication amount management device 200 receives the calculation result of the data amount of the terminal device 400 received from the proxy device 100 and calculates a free communication amount on the basis of the calculation result.

The SMS server 300 is a device that performs push transmission of a short message service (SMS) message to be a push-type message to the local network. The SMS server 300 is located in the local network in FIG. 1. However, the SMS server 300 may be disposed outside the local network.

Each of the NAT 500A and the NAT 500B is the NAT that is disposed between the terminal device 400 and the proxy device 100 and is a device that issues a global IP address for the terminal device 400, according to connection from the terminal device 400. As a result, the terminal device 400 is connected to the proxy device 100 using the global IP address. The NAT 500A is disposed in the local network and the NAT 500B is disposed in the Wifi network.

The terminal device 400 is a mobile phone, for example, and can perform communication connection with the NAT 500 and the various service servers via a wireless communication network (for example, the local network) including a base station and an RNC, using a connectionless-type protocol (for example, an UDP). In addition, the terminal device 400 can perform the communication connection, using a connection-type protocol (for example, a TCP). The terminal device 400 is configured to transmit response data to the various service servers for every predetermined time or every predetermined reception packet amount, when data is received from the various service servers. This is to enable the proxy device 100 to recognize that the terminal device 400 can perform communication. As the terminal device 400, a device other than the mobile phone is also considered. For example, the terminal device 400 may include a PDA, a PC, a domestic electronic apparatus, and a game machine having a wireless communication function.

The service server 600 is a server on the Internet provided by a content provider, for example. The service server 600 is a device that distributes content data to the terminal device 400, using the connectionless-type protocol (for example, the UDP), according to a request from the terminal device 400. The service server 600 is not limited to the content provider and may be a PC, a game machine, or a domestic electronic apparatus (a television and a DVD recorder) that can be connected to a gateway server for connection with other communication network, a business LAN, and the Internet. In this case, the terminal device 400 can perform communication with a mobile machine connected to other communication network. The home network service server 700 is a service server belonging to the home network and is the same as the service server 600, except for the network to which the home network service server belongs.

In the communication system configured as described above, if data is transmitted from the service server 600 using the connectionless-type protocol such as the UDP, the proxy device 100 calculates a transmitted data amount of a network between the proxy device 100 and the terminal device 400 and transfers the data to the NAT 500. The NAT 500 transmits the data to the terminal device 400.

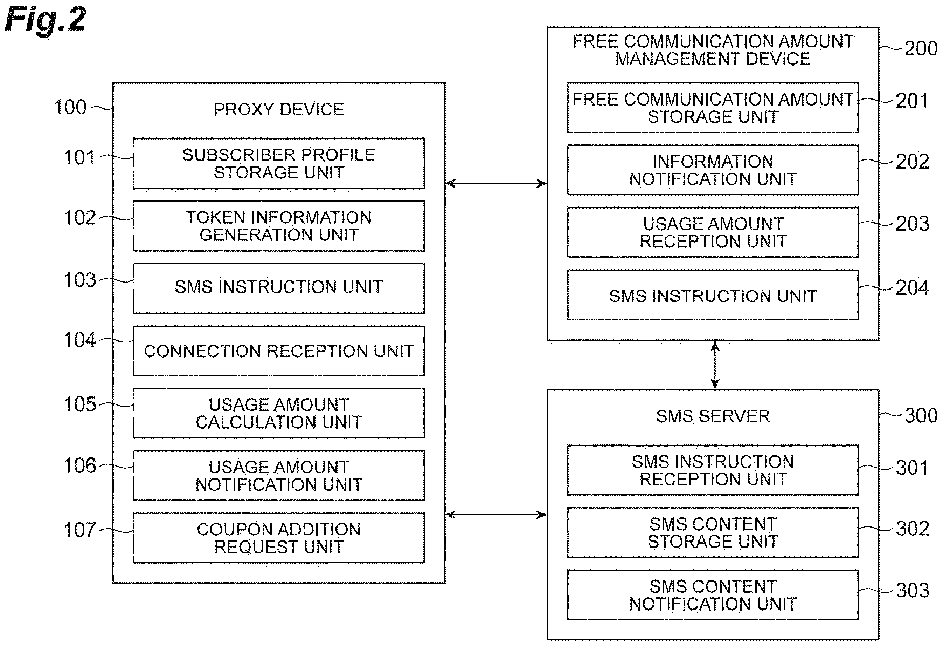

Configurations of the proxy device 100, the free communication amount management device 200, and the SMS server 300 executing the above processing will be described. FIG. 2 is a block diagram illustrating functions of the proxy device 100, the free communication amount management device 200, and the SMS server 300.

First, the proxy device 100 will be described. The proxy device 100 is configured to include a subscriber profile storage unit 101 (permission information storage unit), a token information generation unit 102, an SMS instruction unit 103 (a permission information transmission unit and a message transmission unit), a connection reception unit 104 (an IP address information reception unit, a history acquisition unit, and a used communication network specifying unit), a usage amount calculation unit 105 (calculation unit), a usage amount notification unit 106, and a coupon addition request unit 107.

The subscriber profile storage unit 101 is a portion that stores a profile of a subscriber to which a local network number of the local network is set, in subscribers of the home network. If local network number information (subscriber information of the local network) is received from the free communication amount management device 200, the subscriber profile storage unit 101 associates token information generated by the token information generation unit 102 and the local network number information and stores an association result.

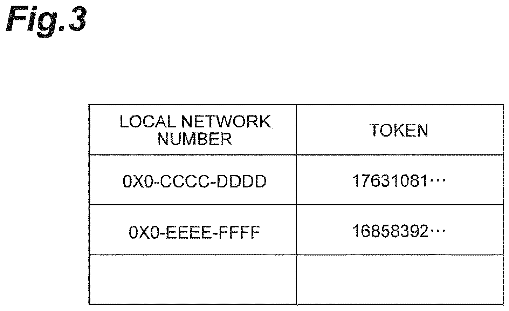

Here, an example of the information stored by the subscriber profile storage unit 101 is illustrated in FIG. 3. As illustrated in FIG. 3, the subscriber profile storage unit 101 associates local network number information and token information and stores an association result as record information in which each field is defined. The local network number information received from the free communication amount management device 200 is input to a local network number field. The token information generated by the token information generation unit 102 is input to a token field.

As such, the subscriber profile storage unit 101 associates the local network number and the token information generated by the token information generation unit 102 and stores an association result. As such, the subscriber profile storage unit 101 associates the token information and the local network number, so that the local network number corresponding to the token can be searched using a token as a search key.

In addition, the subscriber profile storage unit 101 may receive a home network number and information of a global IP address (global IP address used by the terminal device 400 in previous connection) recently used by the terminal device 400 from the free communication amount management device 200 and may further store other information such as the home network number and the global IP address.

The token information generation unit 102 is a portion that generates token information after receiving the local network number from the free communication amount management device 200. The token information generation unit 102 generates the token information to be unique information. For example, the token information generation unit 102 generates the token information by using a random number by the known technology.

If the token information generation unit 102 generates the token information, the token information generation unit 102 stores the local network number information received from the free communication amount management device 200 and the token information in the subscriber profile storage unit 101. In addition, the token information generation unit 102 notifies the SMS instruction unit 103 of the local network number information received from the free communication amount management device 200 and the token information, so that the token information can be transmitted from the SMS server 300.

The SMS instruction unit 103 is a portion that requests the SMS server 300 to issue an SMS. Specifically, the SMS instruction unit 103 requests the SMS server 300 to transmit the token information to a local network number destination (subscriber information destination of the local network) or requests the SMS server 300 to issue an SMS to a local network number destination corresponding to the terminal device 400, according to a notification from the connection reception unit 104, after receiving the global IP address information from the terminal device 400. In addition, the SMS instruction unit 103 receives an issue result when the SMS instruction unit 103 requests the SMS server 300 to issue the SMS to the local network number destination corresponding to the terminal device 400 according to the notification from the connection reception unit 104, from the SMS server 300, and notifies the connection reception unit 104 of the issue result.

The connection reception unit 104 is a portion that receives the token information transmitted by the SMS instruction unit 103 and the global IP address information of the connection request by the terminal device 400. The connection reception unit 104 determines whether the token information is received and determines whether the token received from the terminal device 400 is a token stored in the subscriber profile storage unit 101. When the received token is not included in tokens stored in the subscriber profile storage unit 101 or the token information is not received, the connection reception unit 104 performs connection refusal (connection regulation).

As such, if the connection reception unit 104 receives the connection request by the terminal device 400, the connection reception unit 104 determines propriety of connection, using the token information received from the terminal device 400 and the token stored in the subscriber profile storage unit 101. That is, the token information is used as information (permission information) showing the propriety of the connection.

In addition, when the token received from the terminal device 400 is the token stored in the subscriber profile storage unit 101, the connection reception unit 104 transmits the local network number information corresponding to the token to the free communication amount management device 200 and acquires global IP address information and network type (type of a network connected by the global IP address) information corresponding to the local network number.

The case in which the connection reception unit 104 acquires the global IP address information and the network type information corresponding to the local network number whenever the connection reception unit 104 receives the connection request has been described. However, the connection reception unit 104 may acquire the global IP address information and the network type information corresponding to the local network number, for every predetermined period (for example, one hour) from when the connection reception unit 104 receives the connection request.

In the case in which the global IP address information and the network type information corresponding to the local network number are acquired from the free communication amount management device 200, when the global IP address received from the terminal device 400 and the global IP address acquired from the free communication amount management device 200 are matched, the connection reception unit 104 determines that the terminal device is connected to the network according to the network type acquired from the free communication amount management device 200.

When the global IP address information is not acquired from the free communication amount management device 200 or when the global IP address is not matched with the global IP address received from the terminal device 400, even though the global IP address information is acquired from the free communication amount management device 200, the connection reception unit 104 causes the SMS instruction unit 103 to perform an SMS notification to the local network number corresponding to the terminal device 400 in a packet switching (PS) mode. For example, the connection reception unit 104 causes the SMS server 300 to perform an SMS notification (for example, a notification of a dummy control signal). In addition, the SMS instruction unit 103 receives a result (a normal notification or an error notification) of the SMS notification and notifies the connection reception unit 104 of the result thereof.

When the error notification is received from the SMS instruction unit 103, the connection reception unit 104 determines Wifi connection (connection by the wireless LAN), and when transmitted to the terminal device 400, the connection reception unit 104 determines that the terminal device 400 uses the local network. Generally, because the connection by the wireless LAN is not a charging target, the connection reception unit 104 can determine whether the connection is charging target connection, by determining whether the connection is the connection by the wireless LAN. In addition, the connection reception unit 104 transmits the local network number corresponding to the token received from the terminal device 400, the global IP address information received from the terminal device 400, and the network type (for example, the local network and the Wifi network) information to the free communication amount management device 200 and registers the global IP address information and the network type information in record information corresponding to the local network number in the information held by the free communication amount management device 200.

The connection reception unit 104 is a device to connect the terminal device 400 and the various service servers, except that the case in which connection regulation is performed. When communication connection is performed, the connection reception unit 104 secures ports for uplink data and downlink data in association with the terminal device 400, manages an association result, receives data transmitted from the various service servers via the port for the downlink data and transmits the data to the terminal device 400, and receives data transmitted from the terminal device 400 via the port for the uplink data, and transmits the data to the various service servers. That is, the connection reception unit 104 also functions as a so-called gateway.

The usage amount calculation unit 105 is a portion that calculates a packet usage amount based on the global IP address received by the connection reception unit 104. Specifically, the usage amount calculation unit 105 counts a data mount (packet amount) of data transmitted from the connection reception unit 104 to the terminal device 400 or the various service servers. That is, the usage amount calculation unit 105 counts an amount of data transmitted and received by the terminal device 400.

The usage amount notification unit 106 is a portion that notifies the free communication amount management device 200 of the packet usage amount calculated by the usage amount calculation unit 105.

The coupon addition request unit 107 is a portion that requests the various service servers to additionally provide the coupon, according to a request from the terminal device 400. The various service servers that receive the additional request for the coupon notify the free communication amount management device 200 of a communication amount corresponding to the additional request for the coupon.

Next, functional blocks of the free communication amount management device 200 will be described. The free communication amount management device 200 is configured to include a free communication amount storage unit 201, an information notification unit 202, a usage amount reception unit 203, and an SMS instruction unit 204.

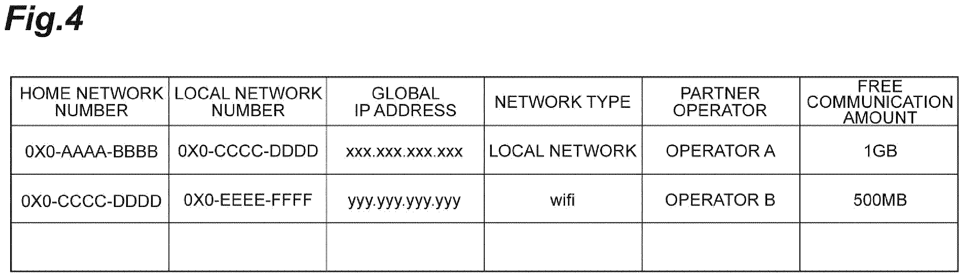

The free communication amount storage unit 201 is a portion that stores information regarding a user of the home network. An example of information stored by the free communication amount storage unit 201 is illustrated in FIG. 4. As illustrated in FIG. 4, the free communication amount storage unit 201 associates a home network number, a local network number, a global IP address, a network type, a partner operator, and a free communication amount and stores an association result as record information in which each field is defined.

A number (for example, a telephone number for the home network) given to the user of the home network is input to a home network number field. A telephone number (local network number) for the local network is input to a local network number field. The local network number is input in a step in which the local network number is given to the user of the home network by a contract. Global IP address information when the terminal device 400 requests for the connection by transmitting the token recently is input to a global IP field. That is, the global IP address is a global IP address that is recently used by the terminal device 400. Global IP address information received from the proxy device 100 is stored in the global IP field.

Information of a type of a network to which the terminal device 400 is connected is input to a network type field. In addition, the network type information is received from the proxy device 100 and is input to the network type field.

Information of a company operating the local network is input to a partner operator field. The information of the company operating the local network is input to the partner operator field at timing when the local network number information is input by an operation input of the free communication amount management device 200.

A free communication amount applied to a user of a user network is input to a free communication amount field. The free communication amount is subtracted according to the use of the user network or the usage amount of the local network. In addition, when the coupon addition request is transmitted via the proxy device 100, an additional communication amount is notified of from the various service servers receiving the coupon addition request of the proxy device 100 and a free communication amount is increased by the communication amount.

The information notification unit 202 is a portion that notifies the proxy device 100 of the information stored by the free communication amount storage unit 201, according to a request from the proxy device 100.

Specifically, the information notification unit 202 receives local network number information from the proxy device 100 and notifies the proxy device 100 of global IP address information and network type information corresponding to a local network number.

The usage amount reception unit 203 is a portion that receives a usage amount notified of from the proxy device 100. When the usage amount is received from the proxy device 100, the free communication amount stored by the free communication amount storage unit 201 is subtracted by the usage amount. In addition, when a notification of coupon addition is received from the various service servers, the usage amount reception unit 203 adds a communication amount corresponding to the addition to a free communication amount.

When the usage amount reception unit 203 changes the usage amount, the SMS instruction unit 204 notifies the SMS server 300 of the changed usage amount to the local network number destination.

Next, functional blocks of the SMS server 300 will be described. In the SMS server 300, an SMS instruction reception unit 301 receives an SMS instruction from the free communication amount management device 200 or the proxy device 100. The SMS instruction reception unit 301 notifies an SMS content notification unit 303 of the received SMS instruction.

In addition, the SMS instruction reception unit 301 receives a non-notification SMS instruction from the local network. In this case, the SMS content notification unit 303 is notified of the received SMS instruction.

An SMS content storage unit 302 is a portion that stores contents of an SMS, when an error occurs as a result of notifying the local network of the SMS. The SMS content storage unit 302 stores the local network number and the contents (for example, token information) of the SMS.

The SMS content notification unit 303 notifies the local network of the SMS (SMS incoming signal), according to an instruction from the SMS instruction reception unit 301. When the SMS instruction reception unit 301 receives the non-notification SMS instruction from the local network, the SMS instruction reception unit 301 acquires targeted information (for example, the token information) from the SMS content storage unit 302 and notifies the local network of the information as the SMS.

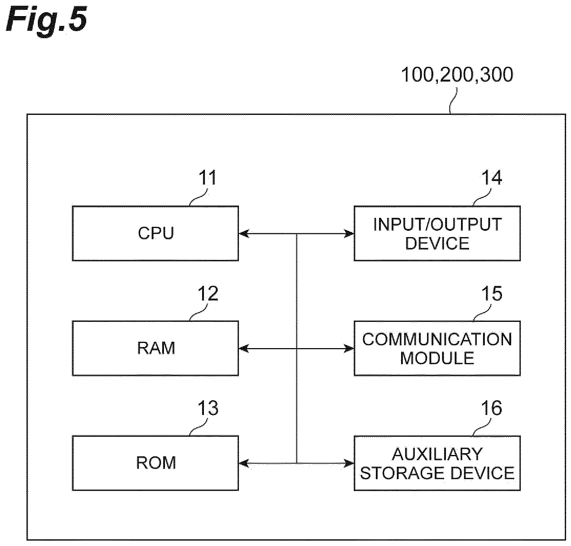

FIG. 5 is a block diagram illustrating hardware configurations of the proxy device 100, the free communication amount management device 200, and the SMS server 300. As illustrated in FIG. 5, each of the proxy device 100, the free communication amount management device 200, and the SMS server 300 is configured as a computer system including one or more CPUs 11, a RAM 12 and a ROM 13 to be main storage devices, an input/output device 14, a communication module 15 to be a data transmission/reception device such as a network card, and an auxiliary storage device 16 such as a hard disk drive and a semiconductor memory. These components are operated by programs, so that functions of the proxy device 100, the free communication amount management device 200, and the SMS server 300 are shown.

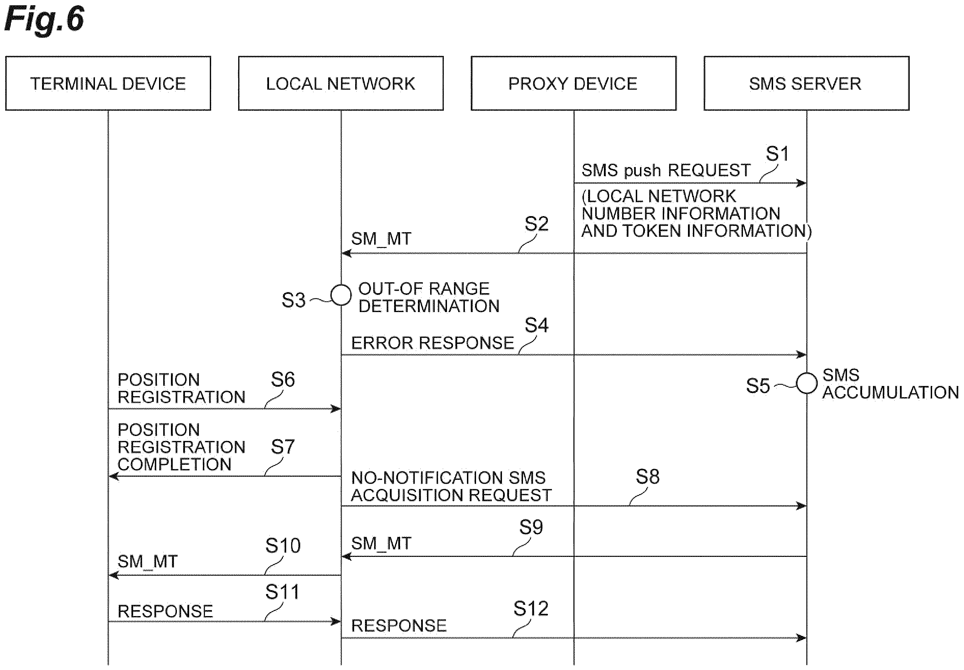

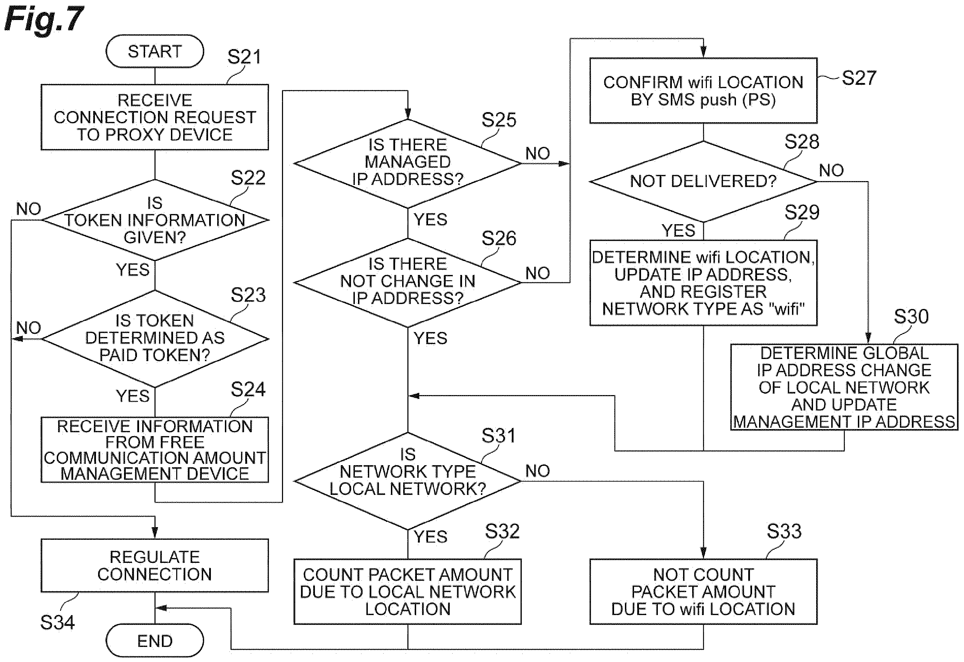

Next, an operation of the communication system according to this embodiment will be described with reference to FIGS. 6 and 7. FIG. 6 is a sequence diagram of processing for causing the proxy device 100 to register the local network number information and the token information in the SMS server 300 (that is, transmitting the token information to the local network number destination) and providing a token to the terminal device 400 at timing when the targeted terminal device 400 registers a position.

If the proxy device 100 receives the local network number information from the free communication amount management device 200, the token information generation unit 102 generates token information, associates the local network number information and the token information, and stores an association result in the subscriber profile storage unit 101 (permission information storage step).

Then, the SMS instruction unit 103 of the proxy device 100 instructs the SMS server 300 to push the token information generated by the token information generation unit 102 to the local network number destination (step S1; permission information transmission step).

The SMS instruction reception unit 301 of the SMS server 300 receives an instruction from the proxy device 100. In addition, the SMS content notification unit 303 notifies the local network of the local network number destination of the token information, on the basis of the instruction received by the SMS instruction reception unit 301. That is, the SMS content notification unit 303 transmits an SMS incoming signal (SM-MT) including the local network number to the local network (step S2).

The local network (for example, a switch in the local network) determines whether the terminal device 400 of the local network number corresponding to the SMS incoming signal transmitted by the SMS server 300 is located within a range (whether the terminal device is connected to the local network). In addition, when it is determined that the terminal device 400 is not located within the range (step S3), the local network notifies the SMS server 300 of an error (step S4).

When the SMS content notification unit 303 of the SMS server 300 receives the error notification from the local network, the SMS content storage unit 302 associates the local network number information and the token information and stores an association result. That is, the SMS content storage unit 302 accumulates contents of the SMS instruction received from the proxy device 100 (step S5).

If the terminal device 400 registers a position with respect to the local network (step S6), the local network notifies the terminal device 400 of position registration completion (step S7).

The local network notifies the SMS server 300 of the local network number information of the terminal device 400 and a non-notification SMS acquisition request (non-notification SMS instruction) (step S8). The SMS instruction reception unit 301 of the SMS server 300 receives the non-notification SMS acquisition request. According to this, the SMS content notification unit 303 notifies the local network of a token corresponding to the local network number as an SMS incoming signal (step S9).

Because the corresponding terminal device 400 is located within the range, the local network notifies the terminal device 400 of the SMS incoming signal (step S10). If the SMS incoming signal is received, the terminal device 400 stores the token included in the SMS incoming signal and sends information showing that the SMS incoming signal is received as a response to the local network (step S11).

In addition, the local network notifies the SMS server 300 of the response received from the terminal device 400 (step S12).

Next, a flowchart illustrated in FIG. 7 will be described. The flowchart illustrated in FIG. 7 is a flowchart of processing for calculating a data usage amount on the basis of connection, when a connection request is transmitted from the terminal device 400 to the proxy device 100. In this step, the terminal device 400 stores the token information by the processing of the sequence diagram illustrated in FIG. 6. In addition, the terminal device 400 transmits the stored token information at the time of communication. First, if there is a connection request from the terminal device 400, the connection reception unit 104 of the proxy device 100 receives the connection request and the global IP address information from the NAT 500 of the local network (step S21; IP address information reception step).

The connection reception unit 104 determines whether the token information is received at the time of the connection request (that is, whether the token information is given from the terminal device 400) (step S22). When the token information is given (step S22; YES), the connection reception unit 104 refers to the subscriber profile storage unit 101 and determines whether the received token is a paid (generated) token (step S23). When the token is not given (step S22; NO) or when the received token is not the paid token (step S23; NO), this is not access from the user of the home network. For this reason, the connection regulation is performed (step S34).

In step S23, when it is determined that the received token is the paid token (step S23; YES), the connection reception unit 104 determines the home network user.

Next, the connection reception unit 104 transmits the local network number information corresponding to the received token to the free communication amount management device 200 and receives the global IP address information and the network type information corresponding to the local network number (step S24).

When the global IP address information is received from the free communication amount management device 200, the connection reception unit 104 determines that there is managed IP address information (step S25; YES) and when the global IP address and the received global IP address are equal to each other, the connection reception unit 104 determines that the IP address is not changed (step S26; YES) and proceeds to step S31.

When the global IP address information is not received from the free communication amount management device 200, that is, there is not the managed IP address information (step S25; NO) or when the managed IP address and the received global IP address are different from each other (step S26; NO), the connection reception unit 104 proceeds to step S27. In step S27, the connection reception unit 104 causes the SMS instruction unit 103 to confirm whether the terminal device is located within the range in a PS mode. That is, the connection reception unit 104 causes the SMS server 300 to perform the SMS notification by the SMS instruction unit 103 (step S27).

As a result of causing the SMS server 300 to confirm whether the terminal device is located in PS by the SMS instruction unit 103, when the terminal device is not located in PS (step S28; YES), the connection reception unit 104 determines that the terminal device 400 uses Wifi and notifies the free communication amount management device 200 of the network type information to register the network type information as Wifi in association with the received global IP address information (step S29). In addition, as the result of causing the SMS server 300 to confirm whether the terminal device is located in PS by the SMS instruction unit 103, when the terminal device is located in PS (step S28; NO), the connection reception unit 104 determines that the terminal device 400 uses the local network and notifies the free communication amount management device 200 of the network type information to register the network type information as the local network in association with the received global IP address information (step S30).

In step S31, when it is determined by the connection reception unit 104 that the network type used by the terminal device 400 is the local network (step S31; YES), the usage amount calculation unit 105 counts the packet amount (step S32; calculation step) and when it is determined by the connection reception unit 104 that the network type used by the terminal device 400 is Wifi (step S31; NO), the usage amount calculation unit 105 ends processing without counting the packet amount.

In FIG. 6, the case in which the local network requests for the non-notification SMS according to the position registration request from the terminal device 400 and acquires the token information has been described. However, when the local network does not request for the non-notification SMS normally, the terminal device 400 may inquire of the SMS server 300 about the non-notification SMS. For example, it is considered that the token information is acquired using an application having a function of causing the terminal device 400 to inquire of the SMS server 300.

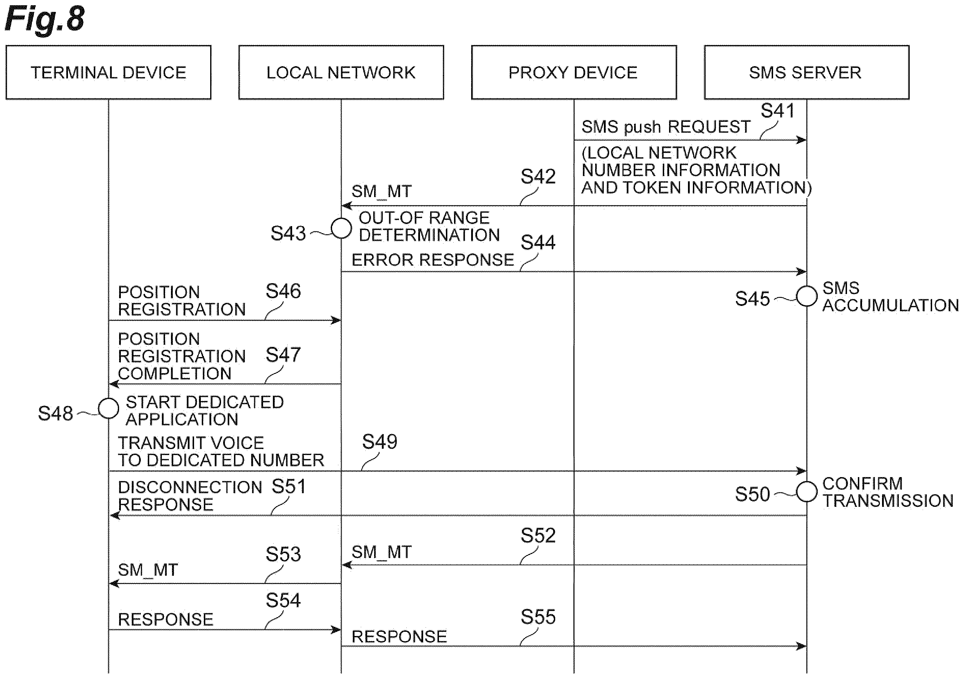

As described above, a processing sequence in which the terminal device 400 inquires of the SMS server 300 and acquires the token information will be described using a sequence diagram illustrated in FIG. 8.

Because steps S41 to S47 are the same as steps S1 to S7 of the sequence diagram of FIG. 6, description thereof is omitted. If the position registration is completed, the terminal device 400 starts a dedicated application inquiring of the SMS server 300 (hereinafter, referred to as the "dedicated application") (step S48). Dedicated number information for inquiring of the SMS server 300 is registered in the dedicated application and the dedicated application transmits a voice to a dedicated number (step S49). The dedicated application may inquire of the SMS server by unstructured supplementary service data (USSD). The SMS server 300 recognizes a calling number (local network number) of the terminal device 400 and makes a disconnection response (step S51). In addition, when the SMS content storage unit 302 stores a token corresponding to the local network number, the SMS content notification unit 303 notifies the local network of token information corresponding to the local network number as an SMS incoming signal (step S52).

Because the corresponding terminal device 400 is located within the range, the local network notifies the terminal device 400 of the SMS incoming signal (step S53). If the SMS incoming signal is received, the terminal device 400 stores the token information included in the SMS incoming signal and transmits information showing that the SMS incoming signal is received to the local network as a response (step S54).

In addition, the local network notifies the SMS server 300 of the response received from the terminal device 400 (step S55).

In the proxy device 100 described above, the subscriber profile storage unit 101 stores the token information associated with the subscriber information (local network number) of the local network and the SMS instruction unit 103 transmits the token information to the local network number destination. The connection reception unit 104 receives the token information and the global IP address information from the terminal device 400 and the usage amount calculation unit 105 calculates a usage amount on the basis of the IP address.

In this case, because the proxy device 100 transmits the token information associated with the local network number to the local network number destination and receives the IP address information and the token information from the terminal device 400, the proxy device 100 can calculate a communication usage amount for each IP address of the terminal device 400 using the local network. That is, even when communication is performed using subscriber information for the local network, a usage amount of the local network can be calculated from the home network side.

In addition, in the proxy device 100, according to reception of the IP address information, the SMS instruction unit 103 transmits a message to the local network number destination, the connection reception unit 104 specifies a used communication network of the terminal device 400 on the basis of a delivery situation of the message, and the usage amount calculation unit 105 determines whether a usage amount is calculated according to a type of the used communication network. In this case, the proxy device 100 can determine whether the usage is a charging target, by the delivery situation of the message.

When the message transmitted by the SMS instruction unit 103 is not delivered to the terminal device 400, the connection reception unit 104 determines that the type of the used communication network is a wireless local area network and when it is determined that the used communication network is the wireless local area network, the usage amount calculation unit 105 does not calculate the usage amount. In this case, a usage amount of the wireless local area network that is not a charging target originally is not calculated.

The proxy device 100 acquires the global IP address information recently used by the local network number and the network type information thereof and determines whether the usage amount is calculated on the basis of the network type. In this case, the proxy device 100 can determine whether the usage amount is calculated on the basis of a previous connection state (that is, a network type of a previously received global IP address).

### Reference Signs List

11: CPU, 12: RAM, 13: ROM, 14: input/output device, 15: communication module, 16: auxiliary storage device, 100: proxy device, 101: subscriber profile storage unit, 102: token information generation unit, 103: SMS instruction unit, 104: connection reception unit, 105: usage amount calculation unit, 106: usage amount notification unit, 107: coupon addition request unit, 200: free communication amount management device, 201: free communication amount storage unit, 202: information notification unit, 203: usage amount reception unit, 204: SMS instruction unit, 300: SMS server, 301: SMS instruction reception unit, 302: SMS content storage unit, 303: SMS content notification unit

## Claims

1. A packet usage amount calculation device for calculating a packet usage amount of a terminal device in a local network in a plurality of networks including at least the local network and a home network, comprising:
a permission information storage unit configured to store permission information associated with subscriber information of the local network;
a permission information transmission unit configured to transmit the permission information to a subscriber information destination of the local network;
an IP address information reception unit configured to receive the permission information transmitted by the permission information transmission unit and IP address information of the terminal device; and
a calculation unit configured to calculate a packet usage amount based on an IP address received by the IP address information reception unit.

2. The packet usage amount calculation device according to claim 1, further comprising:
a message transmission unit configured to transmit a message to the subscriber information destination of the local network, according to reception of the IP address information by the IP address information reception unit; and
a used communication network specifying unit configured to specify a type of a used communication network, on the basis of a delivery situation of the message transmitted by the message transmission unit,
wherein the calculation unit determines whether the packet usage amount is calculated, on the basis of the type of the used communication network specified by the used communication network specifying unit.

3. The packet usage amount calculation device according to claim 2, wherein
when the message transmitted by the message transmission unit is not delivered to the terminal device, the used communication network specifying unit determines that the type of the used communication network is a wireless local area network, and
when it is determined by the used communication network specifying unit that the used communication network is the wireless local area network, the calculation unit does not calculate a packet usage amount of the wireless local area network.

4. The packet usage amount calculation device according to claim 2 or 3, further comprising:
a history acquisition unit configured to acquire IP address information used recently and type information of a used communication network of an IP address,
wherein, when the IP address received by the IP address information reception unit is equal to the IP address acquired by the history acquisition unit, the calculation unit determines whether the packet usage amount is calculated, on the basis of a type of a used communication network associated with the IP address.

5. The packet usage amount calculation device according to any one of claims 2 to 4, wherein
the message is an SMS message.

6. A packet usage amount calculation method that is executed by a packet usage amount calculation device for calculating a packet usage amount of a terminal device in a local network in a plurality of networks including at least the local network and a home network, comprising:
a permission information storage step of storing permission information associated with subscriber information of the local network;
a permission information transmission step of transmitting the permission information to a subscriber information destination of the local network;
an IP address information reception step of receiving the permission information transmitted in the permission information transmission step and IP address information of the terminal device; and
a calculation step of calculating a packet usage amount based on an IP address received by the IP address information reception step.
